# EUROPÄISCHE PATENTANMELDUNG

(11) **EP 4 095 022 A1**
(43) Veröffentlichungstag der Anmeldung: **30.11.2022**
(21) Anmeldenummer: 22175446.8
(22) Anmeldetag: 25.05.2022
(51) Int. Cl.: B62H 3/12

(54) **FAHRRADHALTER**

(30) Priorität: 25.05.2021 LU 500204
(71) Anmelder: Alfred Schellenberg GmbH, 57078 Siegen (DE)
(72) Erfinder: Schellenberg, Alfred, 57078 Siegen (DE)
(74) Vertreter: Hoffmann, Jürgen

(57) **Zusammenfassung**

Die Erfindung betrifft einen Fahrradhalter mit einer Hängevorrichtung, die dazu ausgebildet ist, an einer Wand oder an einer Decke montiert zu werden und ein Fahrrad hängend zu halten. Der Fahrradhalter weist eine Horizontalstützvorrichtung auf, die ein an der Hängevorrichtung hängendes Fahrrad horizontal abstützt.

## Beschreibung

Die Erfindung betrifft einen Fahrradhalter mit einer Hängevorrichtung, die dazu ausgebildet ist, an einer Wand oder an einer Decke montiert zu werden und ein Fahrrad hängend zu halten.

Aus DE 199 18 074 A1 ist ein Fahrradaufzug bekannt. Der Fahrradaufzug beinhaltet zwei, jeweils an dem Ende eines biegsamen, zugfesten Elements, wie eines Kabels oder einer Kette, angeordnete Aufhängehaken zum Angreifen an ein Fahrrad und zum Heben eines Fahrrads.

Aus US 6 161 702 ist ein Fahrradhebesystem und ein Verfahren zum Aufbewahren eines Fahrrads über dem Boden in einem Gebäude wie einem Lagerhaus oder einer Garage bekannt. Das Fahrradhebesystem umfasst eine Rolle und Gurte, die mechanisch an der Rolle befestigt sind. Ein Fahrrad kann angehoben und über dem Boden im Gebäude aufbewahrt werden, wenn die Gurte auf die Rolle aufgewickelt sind.

Aus WO 2006 129 335 A2 ist eine Vorrichtung zum hängenden Aufbewahren von Fahrrädern und ähnlichen Zweirädern bekannt. Die Vorrichtung weist zwei Träger mit Umlenkrollen auf. Die Träger werden parallel zueinander an der Decke einer Kraftfahrzeuggarage montiert und ermöglichen es, eine Vielzahl von Fahrrädern nebeneinander angeordnet hängend zu tragen.

Aus FR 2 472 503 A1 ist eine Fahrradträgervorrichtung bekannt, die es erlaubt, ein Fahrrad an einer Decke aufzuhängen. Der Fahrradträger kann in eine Montagestellung und in einer Aufbewahrungsstellung überführt werden. In der Aufbewahrungsstellung ist das Fahrrad in einer horizontalen Ebene parallel zur Decke des Raums angeordnet.

Aus DE 20 2021 100353 U1 ist eine horizontale Fahrradwandhalterung bekannt, die mittels eines Befestigungskörpers an der Wand befestigt wird und die zwei Schwenkarme mit Haken zum Halten eines Fahrrades aufweist.

Aus US 7 631 854 B1 ist eine Fahrrad-Aufbewahrungsvorrichtung bekannt, bei der das Fahrrad in einer horizontalen Ebene parallel zur Decke eines Raums aufgehängt wird.

Aus US 4 136 782 A ist eine Wandhalterung für ein Fahrrad bekannt, die eine an der Wand angeordnete horizontale Rinne aufweist, in die die unteren Abschnitte der Räder eines zu haltenden Fahrrades gestellt werden. Das in die Rinne gestellte Fahrrad wird mit einem schwenkbaren Haken in einer geneigten Stellung an der Wand gehalten.

Aus US 3 872 972 A ist eine Fahrrad-Aufbewahrungsvorrichtung bekannt, bei der das Fahrrad mittels eines Flaschenzugmechanismus in einer horizontalen Ebene parallel zur Decke eines Raums aufgehängt wird.

Aus US 2007/029267 A1 ist eine Fahrrad-Aufbewahrungsvorrichtung bekannt, die es erlaubt, mehrere umgekehrt an ihren Rädern eingehakte Fahrräder aufzuhängen.

Es ist die Aufgabe der vorliegenden Erfindung, einen Fahrradhalter anzugeben, der wenigstens eine zusätzliche Anwendungsmöglichkeit bietet.

Die Aufgabe wird durch einen Fahrradhalter gelöst, der dadurch gekennzeichnet ist, dass der Fahrradhalter eine Horizontalstützvorrichtung aufweist, mittels der ein an der Hängevorrichtung hängendes Fahrrad horizontal fixierbar ist.

Der erfindungsgemäße Fahrradhalter hat den ganz besonderen Vorteil, dass ein aufgehängtes Fahrrad nicht mehr pendeln kann, sondern vielmehr mittels der Horizontalstützvorrichtung auch in horizontaler Richtung fixiert ist. Auf diese Weise kann der erfindungsgemäße Fahrradhalter im Gegensatz zu den aus dem Stand der Technik bekannten Aufhängvorrichtungen nicht nur zur Aufbewahrung eines Fahrrades, sondern insbesondere auch als Montagehalter verwendet werden, der das Durchführen von Reparaturarbeiten und/oder Wartungsarbeiten an einem gehaltenen Fahrrad erlaubt, ohne dass sich das Fahrrad bewegt oder umständlich mit einer Hand festgehalten werden muss. Vielmehr bleibt ein von dem erfindungsgemäßen Fahrradhalter gehaltenes Fahrrad ortsfest, so dass der Benutzer beide Hände frei hat, um Wartungsarbeiten und/oder Reparaturarbeiten an dem gehaltenen Fahrrad durchführen zu können.

Vorzugsweise ist die Horizontalstützvorrichtung derart ausgebildet, dass sie ein horizontales Abstützen eines mittels der Hängevorrichtung aufgehängten Fahrrades erlaubt, ohne die Rotierbarkeit der Räder und/oder der Tretkurbel zu behindern. Dies kann beispielsweise dadurch ermöglicht sein, dass die Horizontalstützvorrichtung seitlich an wenigstens ein Rahmenteil des Fahrrades, beispielsweise an die Sitzstrebe und/oder die Kettenstrebe und/oder an die Gabel, ankoppelbar ist. Auf diese Weise ist es dem Benutzer ermöglicht, Funktionsprüfungen, wie beispielsweise eine Prüfung der Funktionen der Schaltung oder der Bremsen, im hängenden Zustand des Fahrrades durchführen zu können. Es ist allerdings nicht grundsätzlich ausgeschlossen, die Horizontalstützvorrichtung an bewegliche Fahrradkomponenten, wie beispielsweise die Räder, anzukoppeln.

Die Hängevorrichtung ist vorzugsweise dazu ausgebildet, ein Fahrrad vertikal ausgerichtet aufzuhängen. Insbesondere ist die Hängevorrichtung vorzugsweise dazu ausgebildet, ein Fahrrad derart aufzuhängen, dass die Radachsen und/oder die Tretkurbel horizontal ausgerichtet sind. Vorzugsweise ist die Hängevorrichtung dazu ausgebildet, ein Fahrrad aufrecht, also mit den Rädern nach unten, aufzuhängen.

Vorzugsweise ist der Fahrradhalter dazu ausgebildet in der Weise verwendet zu werden, dass das Fahrrad zunächst, insbesondere vertikal ausgerichtet, aufgehängt und anschließend in horizontaler Richtung fixiert wird. Insbesondere kann der Fahrradhalter vorteilhaft dazu ausgebildet sein, dass das, insbesondere vertikal ausgerichtete, Fahrrad zunächst in der gewünschten Höhe aufgehängt und anschließend in horizontaler Richtung fixiert wird. Insbesondere kann vorteilhaft vorgesehen sein, dass die gewünschte Höhe stufenlos einstellbar ist.

Bei einer besonders einfach bedienbaren Ausführung kann ein Fahrrad ausschließlich mittels der Hängevorrichtung (und ohne Verwendung der Horizontalstützvorrichtung), insbesondere vertikal ausgerichtet, zunächst aufgehängt werden. Anschließend kann eine Fixierung in horizontaler Richtung mittels der Horizontalstützvorrichtung erfolgen.

Vorzugsweise ist der Fahrradhalter derart ausgebildet, dass ein Fahrrad unabhängig von der Drehstellung der Tretkurbeln aufgehängt werden kann.

Die, insbesondere an einer Wand oder einer Decke befestigte, Horizontalstützvorrichtung ist vorzugsweise dazu ausgebildet und angeordnet, unmittelbar an das hängende Fahrrad angekoppelt zu werden, um dieses in der Horizontalebene abzustützen und insbesondere ein Pendeln des Fahrrades relativ zur Wand und/oder zur Decke zu verhindern.

Die Hängevorrichtung wird vorzugsweise von unten an einer Decke, beispielsweise an einer Zimmerdecke, einer Kellerdecke oder einer Garagendecke, befestigt. Es ist alternativ auch möglich, die Hängevorrichtung im oberen Bereich einer Wand zu befestigen. Die Hängevorrichtung kann hierzu eine Wandhalterung aufweisen. Vorzugsweise wird die Hängevorrichtung fest und unbeweglich an einer Decke oder an einer Wand montiert. Vorzugsweise weist die Hängevorrichtung eine Hebevorrichtung mit wenigstens einem Zugmittel zum Heraufziehen bzw. Wiederablassen eines Fahrrades auf, was weiter unten im Detail erläutert ist.

Bei einer besonderen Ausführung ist die Horizontalstützvorrichtung dazu ausgebildet, an einer Wand montiert zu werden. Es ist jedoch auch möglich, die Horizontalstützvorrichtung an anderen Strukturen, wie beispielsweise an einer Decke, beispielsweise einer Kellerdecke oder einer Garagendecke, oder am Fußboden zu befestigen. Insbesondere kann auch vorgesehen sein, dass die Horizontalstützvorrichtung, insbesondere ausschließlich, an der Hebevorrichtung befestigt ist.

Bei einer ganz besonders vorteilhaften Ausführung weist die Horizontalstützvorrichtung wenigsten einen Stützarm auf. Insbesondere können auch mehrere Stützarme, insbesondere mehrere gleiche Stützarme, vorhanden sein.

Der Stützarm kann ein Befestigungselement aufweisen, das dazu ausgebildet ist, an einer Wand befestigt zu werden, insbesondere an eine Wand angeschraubt zu werden. Beispielsweise kann das Befestigungselement einen Flansch mit wenigstens einer Durchgangsbohrung für eine Befestigungsschraube aufweisen.

Der Stützarm kann, insbesondere an seinem freien Ende, eine Koppelvorrichtung zum Ankoppeln an ein Fahrrad aufweisen. Vorzugsweise ist die Koppelvorrichtung werkzeugfrei bedienbar ausgebildet. Dies hat den ganz besonderen Vorteil, dass der Benutzer das hängende Fahrrad einfach und ohne Zuhilfenahme von Werkzeug horizontal sichern kann und die horizontale Sicherung auch ohne Zuhilfenahme von Werkzeug wieder lösen kann. Allerdings ist es nicht ausgeschlossen die Koppelvorrichtung derart auszubilden, dass sie mittels eines Werkzeugs an ein Fahrrad ankoppelbar und/oder mittels eines Werkzeugs von dem Fahrrad wieder lösbar ist.

Insbesondere im Hinblick auf eine werkzeugfreie Ankoppelbarkeit und/oder werkzeugfreie Lösbarkeit kann die Koppelvorrichtung vorteilhaft eine, insbesondere federgespannte oder federspannbare, Klammer und/oder eine Rastvorrichtung und/oder eine Spannzange und/oder eine Befestigungsöse und/oder einen Haken aufweisen. Es ist auch möglich, das die Koppelvorrichtung eine Klettbefestigung und/oder ein Befestigungsband, insbesondere ein Befestigungsband mit einem Klettverschluss, aufweist. Alternativ oder zusätzlich ist auch möglich, dass die Koppelvorrichtung ein Seil oder einen Gurt aufweist, wodurch ein Festbinden ermöglicht ist.

Beispielsweise kann die Koppelvorrichtung ein, insbesondere halbzylinderförmiges, Anlageelement aufweisen, das an ein Rahmenteil eines Fahrradrahmens, beispielsweise an ein Gabelrohr, ein Sattelstützenrohr, eine Kettenstrebe oder eine Sattelstützstrebe, anlegbar ist. Vorzugsweise ist das Anlageelement aus einem elastischen Material gefertigt. Dies hat den besonderen Vorteil, dass sich das Anlegeelement an das jeweilige Rahmenteil anschmiegen kann. Alternativ oder zusätzlich kann das Anlageelement aus einem weichen Material gefertigt sein oder mit einem weichen Überzug überzogen sein, so dass Beschädigungen des Rahmenteils, insbesondere Kratzer, vermieden sind. Zusätzlich kann vorteilhaft ein Verschlusselement vorhanden sein, das derart an dem Anlegeelement festlegbar ist, dass es gemeinsam dem Anlegeelement das Rahmenteil umschließt und dadurch fixiert. Das Verschlusselement kann beispielsweise ein Band mit einem Klettverschluss oder ein Gummiband oder ein Bügel, insbesondere ein schwenkbar gelagerter Drahtbügel, sein.

Vorzugsweise weist das Anlegeelement wenigstens ein Befestigungselement zum, vorzugsweise werkzeugfreien, Festlegen des Verschlusselements auf. Das Befestigungselement kann beispielsweise als Haken ausgebildet sein, in den das Gummiband eingehängt werden kann. Insbesondere können zwei Haken vorhanden sein, in die das Gummiband eingehängt werden kann. Das Befestigungselement kann alternativ beispielsweise als Öse ausgebildet sein, durch die ein Band gezogen werden kann.

Bei einer ganz besonders vorteilhaften Ausführung ist die horizontale Länge der Horizontalstützvorrichtung, insbesondere stufenlos, einstellbar. Hierfür kann beispielsweise ein Stützarm der Horizontalstützvorrichtung teleskopierbar ausgebildet sein.

In ganz besonders vorteilhafter Weise kann die Horizontalstützvorrichtung derart ausgebildet sein, dass sie, insbesondere werkzeugfrei, wahlweise in eine Bereitschaftsstellung oder eine Wirkstellung überführt werden kann. Dies ermöglicht es dem Benutzer, Bewegungs- und Stauraum freizugeben, wenn der Fahrradhalter nicht benutzt wird. Auch im Hinblick auf die Verkehrssicherheit ist es von besonderem Vorteil, wenn die Horizontalstützvorrichtung bei Nichtgebrauch in eine Bereitschaftsstellung überführt werden kann, in der sie vorzugsweise weniger in den Raum hinein ragt. Auf diese Weise ist insbesondere eine ungewollte Kollision mit der Horizontalstützvorrichtung vermieden.

Beispielsweise kann die Horizontalstützvorrichtung derart ausgebildet sein, dass wenigstens ein Teil des Stützarmes in der Bereitschaftsstellung parallel zu der Wand angeordnet ist, an der die Horizontalstützvorrichtung befestigt ist, und/oder dass wenigstens ein Teil des Stützarmes in der Bereitschaftsstellung an der Wand anliegt, an der die Horizontalstützvorrichtung befestigt ist.

Alternativ oder zusätzlich kann die Horizontalstützvorrichtung vorteilhaft derart ausgebildet sein, dass wenigstens ein Teil des Stützarmes in der Wirkstellung in einem von Null Grad verschiedenen Winkel, insbesondere senkrecht, zu der Wand angeordnet ist, an der die Horizontalstützvorrichtung befestigt ist, und/oder dass wenigstens ein Teil des Stützarmes in der Wirkstellung von der Wand absteht, an der die Horizontalstützvorrichtung befestigt ist. Eine solche Ausführung ermöglicht ein einfaches Ankoppeln an ein Fahrrad.

Zur Realisierung der Idee, die Horizontalstützvorrichtung wahlweise in eine Bereitschaftsstellung oder eine Wirkstellung überführen zu können, kann die Horizontalstützvorrichtung beispielsweise klappbar ausgebildet sein. Insbesondere kann vorteilhaft vorgesehen sein, dass ein Stützarm (oder insbesondere jeder von mehreren Stützarmen) zwei mittels eines, insbesondere arretierbaren, Gelenks gelenkig verbundene Stützarmteile aufweist. Zum, insbesondere werkzeugfreien, Arretieren des Gelenks kann beispielsweise eine Hülse vorhanden sein, die über das Gelenk geschoben werden kann oder in die das Gelenk hinein bewegt werden kann. Hinsichtlich der Ausbildung des Arretiermittels zum Arretieren des Gelenks gibt es keine grundsätzlichen Beschränkungen.

Ganz allgemein ist es von Vorteil, wenn der Stützarm (oder insbesondere jeder von mehreren Stützarmen) zwei mittels eines Gelenks gelenkig verbundene Stützarmteile aufweist. Hierdurch kann nämlich vorteilhaft realisiert sein, dass die Winkelstellung eines Stützarmteils in der Wirkstellung, insbesondere in einer horizontalen Ebene, veränderbar und/oder einstellbar ist. Insbesondere in Kombination mit einer Veränderbarkeit der Länge des Stützarmes ist dies besonders vorteilhaft, weil jeder denkbare Ankoppelpunkt eines Fahrrades mit der Ankoppelvorrichtung des Stützarmes erreicht und zum horizontalen Abstützen verwendet werden kann. Hierbei kann wenigstens ein Stützarmteil, insbesondere horizontal und/oder vertikal, durchaus in einem von 90 Grad verschiedenen Winkel zur Wand verlaufen. Insbesondere kann der Stützarmteil, der die Ankoppelvorrichtung aufweist, insbesondere horizontal und/oder vertikal, in einem von 90 Grad verschiedenen Winkel zur Wand verlaufen. Eine horizontale Abstützung wird auch dann erreicht, wenn der Stützarm nicht senkrecht zur Wand verläuft.

Bei einer besonderen Ausführung mit zwei Stützarmteilen ist ein erstes Stützarmteil senkrecht zur Wand und um seine Längserstreckungsrichtung drehbar an der Wand befestigt. Hierfür kann das erste Stützarmteil mittels eines ersten Drehgelenks an dem Befestigungselement befestigt sein. Das zweite Stützarmteil ist mittels eines weiteren Drehgelenks, das als Scharniergelenk ausgebildet ist, schwenkbar an dem ersten Stützarmteil befestigt. Die ermöglicht es, dass das zweite Stützarmteil in der Bereitschaftsstellung vertikal nach unten ausgerichtet sein kann. Um das zweite Stützarmteil in die Wirkstellung zu überführen kann es mittels des ersten Drehgelenks um 90 Grad nach oben geschwenkt werden. Das zweite Drehgelenk erlaubt es dann, das zweite Stützarmteil in einer horizontalen Ebene zu schwenken. Das zweite Stützarmteil ist vorzugsweise hinsichtlich seiner Länge einstellbar. Insbesondere kann das zweite Stützarmteil teleskopierbar ausgebildet sein.

Wie bereits erwähnt, kann die Hängevorrichtung eine Hebevorrichtung mit wenigstens einem flexiblen Zugmittel, insbesondere mit zwei flexiblen Zugmitteln, aufweisen, mittels der ein Fahrrad in eine Aufbewahrungsposition herauf gezogen und aus dieser Aufbewahrungsposition wieder abgelassen werden kann. Insbesondere kann die Hebevorrichtung eine Wickelwelle aufweist, auf die das Zugmittel aufwickelbar ist.

Bei einer ganz besonders vorteilhaften Ausführung weist die Hebevorrichtung einen elektrischen Antriebsmotor auf. Der Antriebsmotor kann beispielsweise als Wechselstrommotor, insbesondere für eine Betriebsspannung von 230 Volt, ausgebildet sein. Alternativ kann der Motor als Gleichstrommotor, insbesondere für eine Betriebsspannung im Bereich von 5 Volt bis 30 Volt oder für eine Betriebsspannung von 12 Volt, ausgebildet sein. Der Fahrradhalter kann insbesondere dazu ausgebildet sein, an ein Stromnetz, insbesondere mit einer Versorgungsspannung von 230 V, angeschlossen zu werden. Der Fahrradhalter kann einen Stromrichter, insbesondere einen Transformator oder ein Schaltnetzteil, beinhalten, der eine Niederspannung, insbesondere eine Gleichspannung, zum Betreiben des Antriebsmotors bereitstellt. Der Stromrichter kann (alternativ oder zusätzlich) auch dazu dienen, einen Ladestrom, insbesondere ein Gleichstrom oder ein Niedervolt-Gleichstrom, für das Fahrrad zur Verfügung zu stellen, was weiter unten im Detail erläutert ist.

Bei einer besonderen Ausführung ist dem Antriebsmotor ein Getriebe triebtechnisch nachgeschaltet. Eine solche Ausführung hat den ganz besonderen Vorteil, dass auch Fahrräder mit einem hohen Gewicht, insbesondere elektrische Fahrräder, verstaut werden können, ohne einen Antriebsmotor mit einer höheren maximalen Ausgangsleistung verwenden zu müssen. Insbesondere kann vorteilhaft vorgesehen sein, dass auch das Getriebe in der Wickelwelle angeordnet ist. Hierdurch wird der in der Wickelwelle zur Verfügung stehende Bauraum besonders gut ausgenutzt. Dies erlaubt es, die gesamte Hängevorrichtung besonders kompakt auszubilden.

Bei einer ganz besonders vorteilhaften Ausführung sind der Antriebsmotor und das Getriebe Bestandteile eines Aktuators der als vorgefertigte Baueinheit in die Wickelwelle eingeschoben werden kann. Insbesondere kann der Aktuator ein Aktuatorgehäuse aufweisen, das wenigstens Teile des Antriebsmotors und wenigstens Teile des Getriebes umgibt.

Um ein Fahrrad in dem Fahrradhalter zu halten, wird das flexible Zugmittel (oder vorzugsweise die flexiblen mehreren Zugmittel) durch Einschalten des Antriebsmotors zunächst so weit von der Wickelwelle abgewickelt, bis es von dem am Boden stehenden Bediener an dem stehenden Fahrrad vorzugsweise mittels eines Ankoppelelements befestigt werden kann. Nach dem Befestigen wird der Antriebsmotor wieder eingeschaltet und die Wickelwelle dadurch bei entgegengesetzter Rotationsrichtung wieder in Rotation versetzt. Hierdurch wird das Zugmittel (bzw. werden die Zugmittel) wieder auf die Wickelwelle aufgewickelt, wodurch das Fahrrad nach oben in eine Aufbewahrungsposition gezogen wird. Anschließend wird das hängende Fahrrad in horizontaler Sichtung mittels der Horizontalstützvorrichtung horizontal abstützt.

Bei einer einfachen Ausführung weist der Fahrradhalter unmittelbar an einem Gehäuse, das zumindest eine Wickelwelle umgibt, wenigstens einen Bedienschalter auf. Diese Ausführung hat jedoch den Nachteil, dass der Fahrradhalter so angebracht sein muss, dass der Benutzer den Bedienschalter erreichen kann.

Bei einer besonders vorteilhaften Ausführung ist ein per Kabel angebundener Bedienschalter vorhanden, der beabstandet von den übrigen Teilen des Fahrradhalters, in einer Greifhöhe, beispielsweise in einer Höhe von 1m bis 1,5 m über dem Boden, an einer Wand montiert sein kann. Eine solche Ausführung hat den ganz besonderen Vorteil, dass die Hängevorrichtung auch dann einfach bedient werden kann, wenn sie an Stellen innerhalb eines Raumes, wie einer Zimmers, einer Garage oder eines Kellerraumes, montiert ist, die für eine Person ohne zusätzliche Hilfsmittel, wie beispielsweise eine Leiter, nicht erreichbar sind. Beispielsweise kann die Hängevorrichtung an einer hohen Decke, beispielsweise in einer Garage, montiert sein, während der per Kabel angebundene Bedienschalter auf der üblichen Höhe eines Lichtschalters angebracht ist.

Bei einer ganz besonders vorteilhaften Ausführung ist eine kabellose Fernbedienung, insbesondere eine Funkfernbedienung, vorhanden, mittels der der Antriebsmotor der Hängevorrichtung steuerbar ist. Eine solche Ausführung hat ebenfalls den ganz besonderen Vorteil, dass die Hängevorrichtung auch dann einfach bedient werden kann, wenn sie an Stellen innerhalb eines Raumes montiert ist, die für eine Person ohne zusätzliche Hilfsmittel nicht erreichbar sind.

Die Fernbedienung kann insbesondere auch ein Smartphone sein, das beispielsweise eine App zur Steuerung der Hängevorrichtung beinhaltet. Insbesondere bei einer solchen Ausführung kann die Steuerung der Hängevorrichtung per Bluetooth oder per WLAN oder über das Internet erfolgen. Insbesondere kann auch vorgesehen sein, dass die Hängevorrichtung dazu ausgebildet ist, in ein Funknetzwerk, insbesondere in ein WLAN-Netzwerk, eingebunden zu werden und über eine ebenfalls in das Funknetzwerk eingebundene Fernbedienung gesteuert zu werden.

Die Hängevorrichtung kann vorteilhaft eine Halterung aufweisen, die dazu ausgebildet und bestimmt ist, an einer Wand oder an einer Decke befestigt zu werden und die als Drehmomentabstützung für den Antriebsmotor fungiert. Die Halterung kann beispielsweise durch ein Rahmengestell, insbesondere aus Metallstreben, gebildet sein.

Die Halterung kann außerdem ein Gehäuse tragen, das zumindest eine Wickelwelle umgibt. Eine solche Ausführung hat den besonderen Vorteil, dass das Gehäuse, beispielsweise für Wartungsarbeiten, abgenommen werden kann, während die übrigen Teile der Hängevorrichtung in der Montageposition verbleiben können. Alternativ ist es auch möglich, dass die Halterung durch das Gehäuse gebildet ist. Eine solche Ausführung kommt mit besonders wenigen Bauteilen aus und kann besonders kompakt ausgebildet werden.

Das Gehäuse schützt die Wickelwelle und den darin angeordneten Antriebsmotor vor äußeren Einflüssen, insbesondere vor Verschmutzung. Insbesondere können auch elektrische und/oder elektronische Bauteile, wie beispielsweise eine Steuerungsvorrichtung oder eine Ladeelektronik für verstaute elektrische Fahrräder und/oder ein Energiespeicher, geschützt innerhalb des Gehäuses angeordnet sein. Für das Zugmittel kann das Gehäuse eine Auslassöffnung aufweisen. Fall mehrere Zugmittel vorhanden sind, kann das Gehäuse eine Auslassöffnung für jedes Zugmittel aufweisen. Es ist alternativ auch möglich, dass das Gehäuse für zwei oder mehr Zugmittel eine gemeinsame Auslassöffnung aufweist.

Das Zugmittel kann beispielsweise ein Seil, ein Band, insbesondere ein Textilband, eine Kette oder eine Perlschnur aufweisen. Letztlich gibt es hinsichtlich der Art des flexiblen Bandes keine grundsätzlichen Beschränkungen. Wenn mehrere Zugmittel vorhanden sind, können diese vorteilhaft gleichartig ausgebildet sein.

Vorzugsweise weist die Hängevorrichtung mehrere, insbesondere genau zwei, Zugmittel auf. Eine solche Ausführung erlaubt es, zu verstauende Fahrräder sicher anzukoppeln.

Bei einer besonderen Ausführung liegt der Horizontalabstand der beiden Zugmittel im Bereich von 50 cm bis 90 cm, insbesondere im Bereich von 55 cm bis 65 cm. Insbesondere kann der Horizontalabstand vorteilhaft 60 cm betragen. Diese Horizontalabstände sind besonders vorteilhaft, wenn Fahrräder verstaut der sollen.

Bei einer ganz besonders vorteilhaften Ausführung ist der Horizontalabstand der Zugmittel, insbesondere stufenlos, einstellbar. Diese Ausführung kann vorteilhaft individuell auf das zu verstauende Fahrrad eingestellt werden.

Um die Hängevorrichtung flexibel und individuell auf das zu verstauende Fahrrad einstellen zu können, kann wenigstens eines der mehreren Zugmittel derart ausgebildet sein, dass dessen Länge, insbesondere stufenlos, veränderbar ist. Hierzu kann beispielsweise ein Gurtversteller, wie bei dem Tragegurt eines Rucksacks, und/oder eine in der Schlaufengröße verstellbare Schlaufe, die auch als Ankoppelelement zum Ankoppeln an ein Fahrrad fungieren kann, vorhanden sein.

Ganz allgemein gilt, dass die Zugmittel unterschiedlich lang sein können, wobei die Längendifferenz der Zugmittel vorzugsweise einstellbar ist. Unterschiedlich lange Zugmittel haben den besonderen Vorteil, dass beispielsweise der Höhenunterschied zwischen dem Sattel und dem Lenker eines Fahrrades durch die Längendifferenz der Zugmittel ausgeglichen werden kann, so dass das Fahrrad trotz des Höhenunterschiedes zwischen dem Sattel und dem Lenker in der Aufbewahrungsposition waagerecht hängen kann.

Vorzugsweise weist wenigstens eines der Zugmittel an seinem freien Ende ein Ankoppelelement zum Ankoppeln eines Fahrrades auf. Beispielsweise kann das Ankoppelelement als, insbesondere verstellbare, Schlaufe ausgebildet sein. Vorzugsweise kann die Weite der Schlaufe, insbesondere stufenlos, eingestellt werden. Die Schlaufe kann beispielsweise dadurch gebildet sein, dass ein Endabschnitt eines Bandes des Zugmittels zurückgeschlagen und an einem Mittelabschnitt des Bandes, beispielsweise mittels eines Klettverschlusses, befestigt ist. Hierzu kann der Endabschnitt beispielsweise mit Kletthaken versehen sein, während der Mittelabschnitt ein Flauschband trägt, oder umgekehrt.

Ganz allgemein kann vorteilhaft vorgesehen sein, dass das Ankoppelelement einen Klettverschluss aufweist. Eine solche Ausführung ist besonders flexibel an unterschiedliche zu verstauende Fahrräder ankoppelbar.

Bei einer besonderen Ausführung weist das Ankoppelelement einen Haken auf. Der Haken kann bei dem Fahrrad, beispielsweise am Lenker oder am Sattel oder an der Sattelstütze, eingehakt werden, um das Fahrrad an den Fahrradhalter anzukoppeln.

Nach einem eigenständigen Erfindungsgedanken, der auch losgelöst von dem Aspekt einer Horizontalstützvorrichtung umsetzbar ist, weist das Ankoppelelement einen Träger und wenigstens zwei, insbesondere genau zwei, Subankoppelelemente auf, von denen wenigstens eines (vorzugsweise alle) an unterschiedlichen Positionen des Trägers, vorzugsweise werkzeugfrei und werkzeugfrei wieder lösbar, festlegbar ist. Auf diese Weise kann der Abstand der Subankoppelelemente individuell und auf das aufzuhängende Fahrrad angepasst eingestellt werden. Der Träger kann vorteilhaft einen horizontalen Schenkel aufweisen, an dem die Subankoppelelemente, insbesondere in Stufen oder stufenlos, verschiebbar angeordnet sind. An dem horizontalen Schenkel kann das Zugmittel unmittelbar befestigt sein. Vorzugsweise weist der Träger außer dem horizontalen Schenkel einen vertikalen Schenkel auf, der, insbesondere mittig, an dem horizontalen Schenkel angeordnet ist. Insbesondere kann vorteilhaft vorgesehen sein, dass ein Ende des vertikalen Schenkels, insbesondere mittig, an dem horizontalen Träger angeordnet ist, während das andere Ende mit dem Zugmittel verbunden ist. Der Träger kann beispielsweise eine T-Form aufweisen. Die Hängevorrichtung kann eines oder mehrere, insbesondere zwei, derartige Ankoppelelemente aufweisen. Insbesondere kann die Hängevorrichtung zwei Zugmittel aufweisen, wobei an jedem Zugmittel ein derartiges Ankoppelelement angeordnet, insbesondere befestigt, ist. Die Subankoppelelemente können insbesondere einen Haken aufweisen oder als Haken ausgebildet sein. Beispielsweise können die Subankoppelelemente derart ausgebildet sein, dass ein Fahrradlenker gleichzeitig in beide Subankoppelelemente eines Ankoppelelements eingehängt werden kann. Zum Einhängen eines Fahrradsattels kann entweder nur eines der Subankoppelelemente verwendet werden. Vorzugsweise werden hierzu zwei Subankoppelelemente verwendet, wobei deren Abstand entsprechend gering eingestellt wird. Die Subankoppelelemente können insbesondere auch als, insbesondere verstellbare, Schlaufe ausgebildet sein. Ganz allgemein kann vorteilhaft vorgesehen sein, dass wenigsten eines der Subankoppelelemente einen Klettverschluss aufweist. Eine solche Ausführung ist besonders flexibel an unterschiedliche zu verstauende Fahrräder ankoppelbar. Die Subankoppelelemente eines Ankoppelelements können vorteilhaft gleich, beispielsweise jeweils als Haken, ausgebildet sein. Es ist alternativ auch möglich, dass ein Ankoppelelement unterschiedlich ausgebildete Subankoppelelemente aufweist.

Wie bereits erwähnt, kann ein derartiges Ankoppelelement auch losgelöst und unabhängig von dem Aspekt einer Horizontalstützvorrichtung umgesetzt werden. Allerdings ist ein Fahrradhalter, der sowohl eine Horizontalabstützvorrichtung (insbesondere in Kombination mit einem oder mehreren der in dieser Beschreibung und/oder den Ansprüchen erwähnten Merkmale) als auch ein derartiges Ankoppelelement, das Subankoppelelemente aufweist, besonders vorteilhaft.

Vorteilhaft ist ein Gebäude, das mit einem erfindungsgemäßen Fahrradhalter ausgerüstet ist. Besonders vorteilhaft ist ein Gebäuderaum, insbesondere eine Garage oder ein Fahrradkeller, der mit einem erfindungsgemäßen Fahrradhalter ausgerüstet ist.

Die Horizontalstützvorrichtung kann in der Weise verwendet werden, dass sie seitlich an ein aufgehängtes Fahrrad angekoppelt wird, um dieses horizontal abzustützen. Alternativ oder zusätzlich kann die Horizontalstützvorrichtung in der Weise verwendet werden, dass sie von vorn oder von hinten an ein aufgehängtes Fahrrad angekoppelt wird, um dieses horizontal abzustützen.

Die Hängevorrichtung kann dazu ausgebildet sein, an ein Stromnetz angeschlossen zu werden, das den Antriebsmotor mit elektrischer Energie versorgt.

Es ist alternativ jedoch auch möglich, dass der Fahrradhalter einen elektrischen Energiespeicher, insbesondere einen Akku, aufweist, der Energie zum Betreiben des Antriebsmotors bereitstellt. Eine solche Hängevorrichtung kann vorteilhafter Weise auch in Räumen verwendet werden, in denen kein Stromnetzanschluss zur Verfügung steht. Beispielsweise kann die Hängevorrichtung derart ausgebildet sein, dass der elektrische Energiespeicher für einen Ladevorgang entnommen und nach dem Aufladen wieder eingefügt werden kann. Hierbei kann insbesondere auch vorgesehen sein, dass eine Aufnahme zum Einstecken des Energiespeichers über ein Kabel angebunden ist. Dies ermöglicht es, den Energiespeicher an einem ohne zusätzliche Hilfsmittel, wie beispielsweise eine Leiter, zugänglichen Ort anzubringen, während die übrigen Teile der Hängevorrichtung an einem Ort angebracht sein können, beispielsweise unmittelbar an einer hohen Decke, der ohne zusätzliche Hilfsmittel nicht zugänglich ist.

Bei einer ganz besonders vorteilhaften Ausführung weist der Fahrradhalter einen elektrischen Steckverbinder zum Ausgeben von elektrischer Energie auf. Diese Ausführung hat den ganz besonderen Vorteil, dass elektrische Werkzeuge, die zum Ausführen von Wartungs- oder Reparaturarbeiten verwendet werden, angeschlossen werden können. Außerdem ist es - alternativ oder zusätzlich - möglich, das Ladegerät eines von dem Fahrradhalter gehaltenen elektrischen Fahrrades anzuschließen.

Es ist, alternativ oder zusätzlich, auch möglich, dass der Fahrradhalter einen Stromrichter, insbesondere einen Transformator oder ein Schaltnetzteil, aufweist. Insbesondere kann auf diese Weise beispielsweise ein Ladestrom, insbesondere ein Gleichstrom oder ein Niedervolt-Gleichstrom, für das Fahrrad zur Verfügung gestellt werden. Dies ermöglicht es beispielsweise, einen Akku eines zu haltenden elektrischen Fahrrades aufzuladen, ohne dass ein zusätzliches Ladegerät benötigt wird.

Die Wickelwelle kann vorteilhaft in einer zu ihrer Längserstreckungsrichtung senkrechten Ebene eine Kreisform aufweisen. Bei einer solchen Ausführung kann beispielsweise mit einer radial verlaufenden Schraube eine drehfeste Abbindung eines Abtriebselements des Antriebsmotors an die Wickelwelle hergestellt sein.

Die Wickelwelle kann alternativ und vorteilhaft in einer zu ihrer Längserstreckungsrichtung senkrechten Ebene eine von der Kreisform abweichende Form aufweisen. Insbesondere kann die Wickelwelle im Querschnitt mehreckig, insbesondere sechseckig oder achteckig, ausgebildet sein. Eine solche Ausführung ermöglicht eine einfache, formschlüssige drehfeste Anbindung eines entsprechend komplementär geformten Abtriebselements des Antriebsmotors. Beispielsweise kann die Wickelwelle eine im Querschnitt sechseckige oder achteckige Innenkontur (insbesondere regelmäßiges Sechseck oder regelmäßiges Achteck) aufweisen, während das Abtriebselement eine im Querschnitt entsprechende sechseckige oder achteckige Außenkontur aufweist. Bei einer besonders vorteilhaften Ausführung weist die Wickelwelle wenigstens ein Wickelrad auf. Das Wickelrad kann beispielsweise auf einer Grundwelle der Wickelwelle drehfest befestigt sein. Vorzugsweise ist für jedes Zugmittel ein Wickelrad vorhanden. Das Wickelrad kann seitliche Begrenzungswangen zum Führen des Zugmittels bei einem Aufwickelvorgang aufweisen. Die Begrenzungswangen können mittels einer Nabe verbunden sein. Insbesondere kann der Abstand der Begrenzungswangen der Breite des Zugmittels in Axialrichtung entsprechen, so dass das Zugmittel bei einem Aufwickelvorgang derart aufgewickelt wird, dass die einzelnen Lagen des aufgewickelten Zugmittels radial übereinander liegen. Auf diese Weise sind vorteilhaft ein unkontrolliertes Aufwickeln und insbesondere ein Verheddern vermieden.

Von ganz besonderem Vorteil ist insbesondere ein Fahrradhalter, der einen oder mehrere der nachfolgend genannten Aspekte aufweist:
1. Fahrradhalter mit einer Hängevorrichtung, die dazu ausgebildet und bestimmt ist, an einer Wand oder an einer Decke montiert zu werden und ein Fahrrad hängend zu halten, dadurch gekennzeichnet, dass der Fahrradhalter eine Horizontalstützvorrichtung aufweist, mittels der ein an der Hängevorrichtung hängendes Fahrrad horizontal fixierbar ist.
2. Fahrradhalter nach Aspekt 1, dadurch gekennzeichnet, dass die Horizontalstützvorrichtung dazu ausgebildet ist, an einer Wand montiert zu werden.
3. Fahrradhalter nach Aspekt 1 oder 2, dadurch gekennzeichnet, dass die Horizontalstützvorrichtung wenigsten einen Stützarm aufweist.
4. Fahrradhalter nach Aspekt 3, dadurch gekennzeichnet, dass der Stützarm ein Befestigungselement aufweist, das dazu ausgebildet ist, an eine Wand angeschraubt zu werden.
5. Fahrradhalter nach Aspekt 4, dadurch gekennzeichnet, dass das Befestigungselement einen Flansch mit wenigstens einer Durchgangsbohrung für eine Befestigungsschraube aufweist.
6. Fahrradhalter nach einem der Aspekte 3 bis 5, dadurch gekennzeichnet, dass der Stützarm an seinem freien Ende eine Koppelvorrichtung zum Ankoppeln an ein Fahrrad aufweist.
7. Fahrradhalter nach Aspekt 6, dadurch gekennzeichnet, dass die Koppelvorrichtung werkzeugfrei bedienbar ausgebildet ist.
8. Fahrradhalter nach Aspekt 6 oder 7, dadurch gekennzeichnet, dass die Koppelvorrichtung eine Klammer und/oder eine Rastvorrichtung und/oder eine Spannzange und/oder eine Befestigungsöse und/oder einen Haken aufweist.
9. Fahrradhalter nach einem der Aspekte 1 bis 8, dadurch gekennzeichnet, dass die horizontale Länge der Horizontalstützvorrichtung, insbesondere stufenlos, einstellbar ist.
10. Fahrradhalter nach einem der Aspekte 1 bis 9, dadurch gekennzeichnet, dass die Horizontalstützvorrichtung wahlweise in eine Bereitschaftsstellung oder eine Wirkstellung überführbar ist.
11. Fahrradhalter nach Aspekt 10, dadurch gekennzeichnet, dass wenigstens ein Teil des Stützarmes in der Bereitschaftsstellung parallel zu der Wand angeordnet ist, an der die Horizontalstützvorrichtung befestigt ist, und/oder dass wenigstens ein Teil des Stützarmes in der Bereitschaftsstellung an der Wand anliegt, an der die Horizontalstützvorrichtung befestigt ist.
12. Fahrradhalter nach Aspekt 10 oder 11, dadurch gekennzeichnet, dass wenigstens ein Teil des Stützarmes in der Wirkstellung in einem von Null Grad verschiedenen Winkel, insbesondere senkrecht, zu der Wand angeordnet ist, an der die Horizontalstützvorrichtung befestigt ist, und/oder dass wenigstens ein Teil des Stützarmes in der Wirkstellung von der Wand absteht, an der die Horizontalstützvorrichtung befestigt ist.
13. Fahrradhalter nach einem der Aspekte 1 bis 12, dadurch gekennzeichnet, dass die Horizontalstützvorrichtung klappbar ausgebildet ist.
14. Fahrradhalter nach einem der Aspekte 3 bis 13, dadurch gekennzeichnet, dass der Stützarm zwei mittels eines Gelenks gelenkig verbundene Stützarmteile aufweist.
15. Fahrradhalter nach Aspekt 14, dadurch gekennzeichnet, dass das Gelenk arretierbar ist und/oder dass der Stützarm ein Arretiermittel, insbesondere eine Hülse, zum Arretieren des Gelenks aufweist.
16. Fahrradhalter nach Aspekt 14 oder 15, dadurch gekennzeichnet, dass das Gelenk als Drehgelenk oder als Drehschiebegelenk ausgebildet ist.
17. Fahrradhalter nach einem der Aspekte 3 bis 16, dadurch gekennzeichnet, dass der Stützarm teleskopierbar ausgebildet ist.
18. Fahrradhalter nach einem der Aspekte 1 bis 17, dadurch gekennzeichnet, dass die Hängevorrichtung eine Hebevorrichtung mit wenigstens einem flexiblen Zugmittel zum Heraufziehen und Wiederablassen eines an dem wenigstens einen Zugmittel befestigten Fahrrades aufweist.
19. Fahrradhalter nach Aspekt 18, dadurch gekennzeichnet, dass die Hebevorrichtung eine Wickelwelle aufweist, auf die das Zugmittel aufwickelbar ist.
20. Fahrradhalter nach Aspekt 18 oder 19, dadurch gekennzeichnet, dass die Hebevorrichtung einen elektrischen Antriebsmotor aufweist.
21. Fahrradhalter nach den Aspekten 19 und 20, dadurch gekennzeichnet, dass die Hebevorrichtung einen als Rohrmotor ausgebildeten und wenigstens teilweise in der Wickelwelle angeordneten Antriebsmotor zum Antreiben der Wickelwelle aufweist.
22. Fahrradhalter nach Aspekt 20 oder 21, dadurch gekennzeichnet, dass dem Antriebsmotor ein Getriebe triebtechnisch nachgeschaltet ist.
23. Fahrradhalter nach einem der Aspekte 19 bis 21 und Aspekt 22, dadurch gekennzeichnet, dass das Getriebe in der Wickelwelle angeordnet ist.
24. Fahrradhalter nach einem der Aspekte 1 bis 23, dadurch gekennzeichnet, dass eine Fernbedienung, insbesondere eine Funkfernbedienung oder ein Smartphone, vorhanden ist, mittels der die Hängevorrichtung steuerbar ist.
25. Fahrradhalter nach einem der Aspekte 20 bis 24, gekennzeichnet durch eine Halterung, die dazu ausgebildet und bestimmt ist, an einer Wand oder an einer Decke befestigt zu werden und die als Drehmomentabstützung für den Antriebsmotor fungiert.
26. Fahrradhalter nach einem der Aspekte 19 bis 25, gekennzeichnet durch ein Gehäuse, das zumindest die Wickelwelle umgibt.
27. Fahrradhalter nach den Aspekten 25 und 26, dadurch gekennzeichnet, dass die Halterung das Gehäuse trägt oder dass die Halterung durch das Gehäuse gebildet ist.
28. Fahrradhalter nach Aspekt 26 oder 27, dadurch gekennzeichnet, dass das Gehäuse eine Auslassöffnung für das Zugmittel aufweist.
29. Fahrradhalter nach einem der Aspekte 1 bis 28, dadurch gekennzeichnet, dass das Zugmittel ein Seil oder ein Band, insbesondere ein Textilband, oder eine Kette oder eine Perlschnur aufweist.
30. Fahrradhalter nach einem der Aspekte 1 bis 29, dadurch gekennzeichnet, dass zwei Zugmittel vorhanden sind.
31. Fahrradhalter nach Aspekt 30, dadurch gekennzeichnet, dass der Horizontalabstand der Zugmittel im Bereich von 50 cm bis 90 cm, insbesondere im Bereich von 55 cm bis 65 cm liegt, oder 60 cm beträgt.
32. Fahrradhalter nach Aspekt 30, dadurch gekennzeichnet, dass der Horizontalabstand der Zugmittel, insbesondere stufenlos, einstellbar ist.
33. Fahrradhalter nach einem der Aspekte 18 bis 32, dadurch gekennzeichnet, dass die Länge wenigstens eines der Zugmittel einstellbar ist oder dass die Zugmittel unterschiedlich lang sind.
34. Fahrradhalter nach einem der Aspekte 1 bis 33, dadurch gekennzeichnet, dass das Zugmittel an seinem freien Ende ein Ankoppelelement zum Ankoppeln eines Fahrrades aufweist oder dass jedes der Zugmittel an seinem freien Ende ein Ankoppelelement zum Ankoppeln eines Fahrrades aufweist.
35. Fahrradhalter nach Aspekt 34, dadurch gekennzeichnet, dass das Ankoppelelement als, insbesondere verstellbare, Schlaufe ausgebildet ist.
36. Fahrradhalter nach Aspekt 34 oder 35, dadurch gekennzeichnet, dass das Ankoppelelement einen Klettverschluss aufweist.
37. Fahrradhalter nach einem der Aspekte 34 bis 36, dadurch gekennzeichnet, dass das Ankoppelelement einen Haken aufweist.
38. Fahrradhalter nach einem der Aspekte 20 bis 37, gekennzeichnet durch einen elektrischen Energiespeicher, insbesondere einen Akku, der Energie zum Betreiben des Antriebsmotors bereitstellt.
39. Fahrradhalter nach einem der Aspekte 1 bis 38, gekennzeichnet durch einen elektrischen Steckverbinder zum Ausgeben von elektrischer Energie.
40. Fahrradhalter nach einem der Aspekte 1 bis 39, gekennzeichnet durch einen Stromrichter, insbesondere einen Transformator oder ein Schaltnetzteil.
41. Fahrradhalter nach einem der Aspekte 1 bis 40, dadurch gekennzeichnet, dass die freien Enden der Zugmittel jeweils ein Gewichtselement aufweisen.
42. Fahrradhalter nach einem der Aspekte 1 bis 41, dadurch gekennzeichnet, dass die Wickelwelle in einer zu ihrer Längserstreckungsrichtung senkrechten Ebene eine von der Kreisform abweichende Form aufweist.
43. Fahrradhalter nach Aspekt 42, dadurch gekennzeichnet, dass die Wickelwelle im Querschnitt mehreckig, insbesondere sechseckig oder achteckig, ausgebildet ist.
44. Fahrradhalter nach Aspekt 42 oder 43, dadurch gekennzeichnet, dass der Antriebsmotor ein Abtriebselement aufweist, das formschlüssig in der Wickelwelle angeordnet ist
45. Fahrradhalter nach einem der Aspekte 1 bis 44, dadurch gekennzeichnet, dass die Wickelwelle wenigstens ein Wickelrad mit seitlichen Begrenzungswangen aufweist.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Fahrradhalters ohne ein Fahrrad,
- Fig. 2: das erste Ausführungsbeispiel eines erfindungsgemäßen Fahrradhalters während des Ankoppelns eines zu haltenden Fahrrades,
- Fig. 3: das erste Ausführungsbeispiel eines erfindungsgemäßen Fahrradhalters mit einem gehaltenen Fahrrad,
- Fig. 4: ein erstes Ausführungsbeispiel eines Stützarmes eines erfindungsgemäßen Fahrradhalters in Bereitschaftsstellung,
- Fig. 5: das erste Ausführungsbeispiel eines Stützarmes beim Überführen in die Wirkstellung,
- Fig. 6: das erste Ausführungsbeispiel eines Stützarmes in der Wirkstellung,
- Fig. 7: ein zweites Ausführungsbeispiel eines Stützarmes eines erfindungsgemäßen Fahrradhalters,
- Fig. 8: ein erstes Ausführungsbeispiel eines erfindungsgemäßen Fahrradhalters ohne ein Fahrrad,
- Fig. 9: ein drittes Ausführungsbeispiel eines Stützarmes eines erfindungsgemäßen Fahrradhalters,
- Fig. 10: ein drittes Ausführungsbeispiel eines erfindungsgemäßen Fahrradhalters mit Stützarmen in Bereitschaftsstellung,
- Fig. 11: das dritte Ausführungsbeispiel eines erfindungsgemäßen Fahrradhalters, bei der Überführung der Stützarme in die Wirkstellung,
- Fig. 12: das dritte Ausführungsbeispiel eines erfindungsgemäßen Fahrradhalters mit Stützarmen in Wirkstellung, und
- Fig. 13: ein Ausführungsbeispiel eines Ankoppelelements einer Hängevorrichtung.

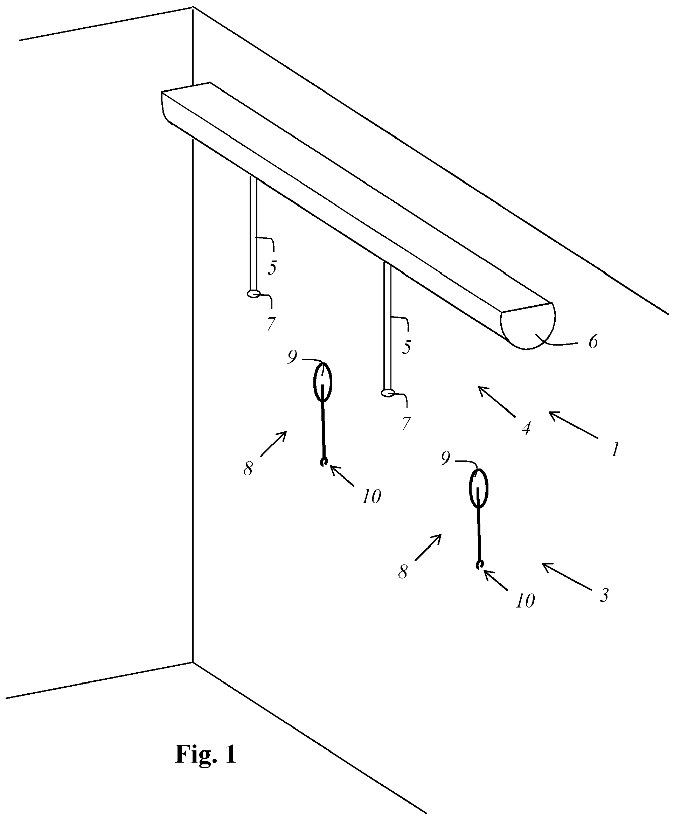

Figur 1 zeigt ein erstes Ausführungsbeispiel eines erfindungsgemäßen Fahrradhalters ohne ein Fahrrad 2. Der Fahrradhalter weist eine Hängevorrichtung 1 auf, die an einer (in dieser Figur nicht sichtbaren) Decke, beispielsweise einer Garagendecke, montiert ist und die dazu ausgebildet ist, ein Fahrrad 2 hängend zu halten.

Die Hängevorrichtung 1 weist eine Hebevorrichtung 4 mit zwei flexiblen Zugmitteln 5 auf. Die Hebevorrichtung 4 weist außerdem eine (nicht dargestellte) Wickelwelle auf, die in einem Gehäuse 6 angeordnet ist und auf die die Zugmittel 5 aufwickelbar sind. Die Zugmittel 5 sind aus Bändern gefertigt, die insbesondere textile Bänder sein können. Das Gehäuse 6 weist für jedes der Zugmittel 5 eine (in den Figuren nicht sichtbare) Auslassöffnung auf.

An den freien Enden weisen die Zugmittel 5 jeweils ein Ankoppelelement 7, beispielsweise eine Schlaufe oder einen Haken, zum Ankoppeln eines Fahrrades 2 auf.

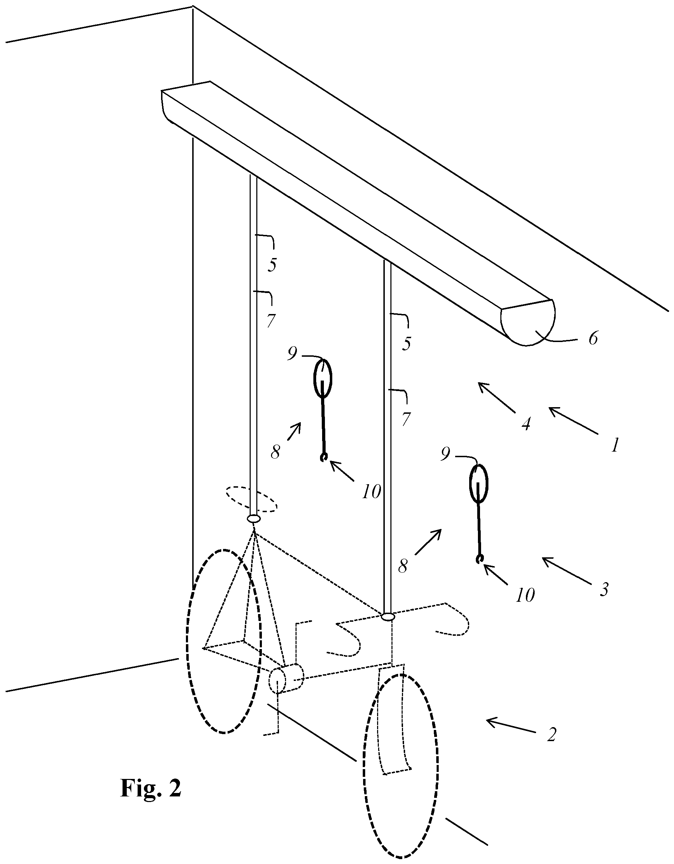

Um ein Fahrrad 2 anzukoppeln, werden die flexiblen Zugmittel 5 durch Einschalten des Antriebsmotors zunächst so weit von der (nicht dargestellten) Wickelwelle abgewickelt, bis sie von einem am Boden stehenden Bediener an dem stehenden Fahrrad 2 mittels der Ankoppelelement 7 befestigt werden können, was in Figur 2 dargestellt ist.

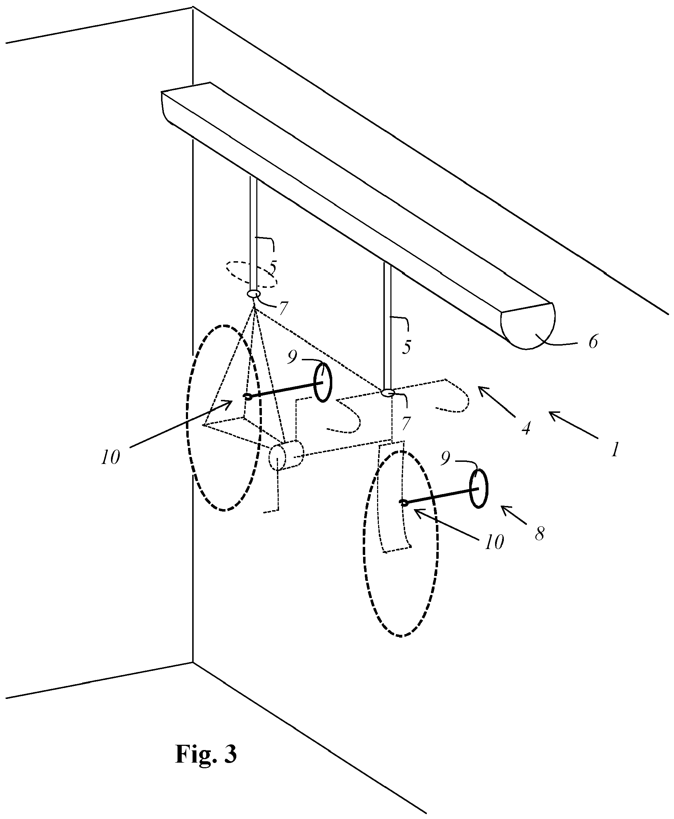

Nach dem Befestigen des Fahrrades 2 an den Zugmitteln 5 wird der Antriebsmotor wieder eingeschaltet und die Wickelwelle dadurch bei entgegengesetzter Rotationsrichtung wieder in Rotation versetzt. Hierdurch werden die Zugmittel 5 wieder auf die Wickelwelle aufgewickelt, wodurch das Fahrrad 2 nach oben in eine Aufbewahrungsposition gezogen wird. Anschließend wird das hängende Fahrrad in horizontaler Sichtung mittels einer Horizontalstützvorrichtung 3 horizontal abstützt, was in der Figur 3 dargestellt ist.

Die Horizontalstützvorrichtung 3 weist zwei Stützarme 8 auf. Jeder Stützarm 8 weist ein Befestigungselement 9 auf, das an einer Wand, beispielsweise einer Garagenwand, angeschraubt ist. Jeder Stützarm 8 weist außerdem an seinem freien Ende eine Koppelvorrichtung 10 zum Ankoppeln an ein Fahrrad 2 auf. Vorzugsweise ist die Länge der Stützarme 8, insbesondere stufenlos, einstellbar.

Jeder Stützarm 8 kann wahlweise in eine Bereitschaftsstellung (wie in den Figuren 1 und 2) oder eine Wirkstellung (wie in Figur 3) überführt werden. Die Stützarme 8 sind in der Bereitschaftsstellung weggeklappt und parallel zu der Wand angeordnet, an der die Horizontalstützvorrichtung 3 befestigt ist. In der in Figur 3 dargestellten Wirkstellung stehen die Stützarme 8 von der Wand ab, an der die Horizontalstützvorrichtung 3 befestigt ist.

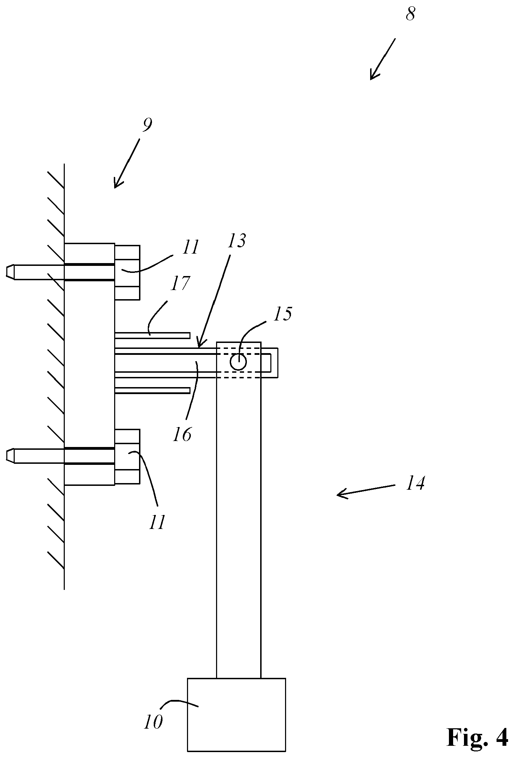

Figur 4 zeigt in einer schematischen Querschnittsdarstellung ein erstes Ausführungsbeispiel eines Stützarmes 8 eines erfindungsgemäßen Fahrradhalters in Bereitschaftsstellung. Der Stützarm 8 weist ein Befestigungselement 9 auf, das an einer Wand, beispielsweise einer Garagenwand, mittels Befestigungsschrauben 11 angeschraubt ist.

Der Stützarm 8 weist zwei mittels eines arretierbaren Gelenks 12 gelenkig verbundene Stützarmteile 13, 14, nämlich einen ersten Stützarmteil 13 und einen zweiten Stützarmteil 14 auf. Der erste Stützarmteil 13 verläuft in der in Figur 4 dargestellten Bereitschaftsstellung teilweise in einem zweiten Schlitz des zweiten Stützarmteils 14. Das Gelenk 12 ist ein Drehschiebegelenk und weist einen Bolzen 15 auf, der fest mit dem zweiten Stützarmteil 14 verbunden ist. Der Bolzen 15 verläuft durch einen ersten Schlitz 16 ersten Stützarmteils 13 und kann in dem ersten Schlitz 16 rotiert und verschoben werden. Der Stützarm 8 ist in der Bereitschaftsstellung nach unten weggeklappt und parallel zu der Wand angeordnet ist, an der die Horizontalstützvorrichtung 3 befestigt ist.

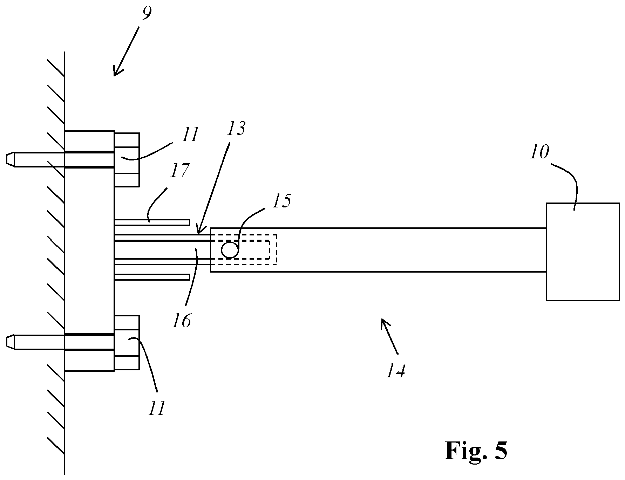

Um den Stützarm 8 in die Wirkstellung zu bringen, wird der zweite Stützarmteil 14 nach oben geklappt, bis seine Längserstreckungsrichtung mit der Längserstreckungsrichtung des ersten Stützarmteils 13 fluchtet, was in Figur 5 dargestellt ist.

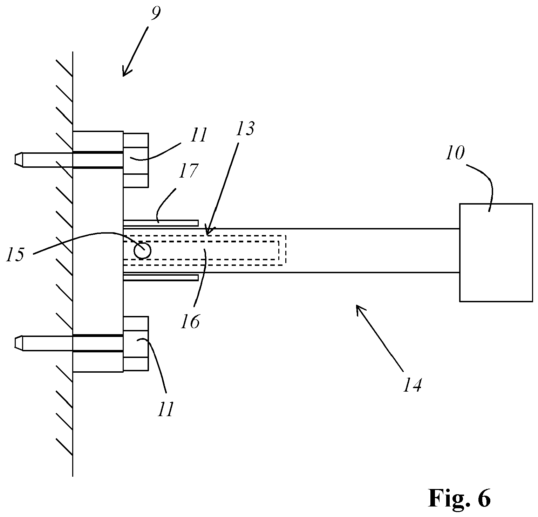

Anschließend wird der zweite Stützarmteil 14 zu dem Befestigungselement 9 hin verschoben. Das Ende des zweiten Stützarmteils 14, das den Bolzen 15 aufweist, taucht hierbei in eine Hülse 17 ein, die die Drehbarkeit des Gelenks 12 blockiert, was in Figur 6 dargestellt ist. Der erste Stützarmteil 13 verläuft in der in Figur 6 dargestellten Wirkstellung vollständig in dem zweiten Schlitz des zweiten Stützarmteils 14.

Beispielsweise kann vorgesehen sein, dass das Ende des zweiten Stützarmteils 14, das den Bolzen 15 aufweist, klemmend in die Hülse 17 eintaucht, so dass ein Herausziehen des zweiten Stützarmteils 14 aus der Hülse 17 nur mit einem bestimmten Kraftaufwand möglich ist und ein ungewolltes Herausziehen verhindert ist. Alternativ oder zusätzlich kann eine, insbesondere formschlüssige und/oder reibschlüssige, Sicherung vorhanden sein.

Der Stützarm 8 weist außerdem an seinem freien Ende eine (in den Figuren 4 bis 6 nur ganz schematisch dargestellte) Koppelvorrichtung 10 zum Ankoppeln an ein Fahrrad 2 auf.

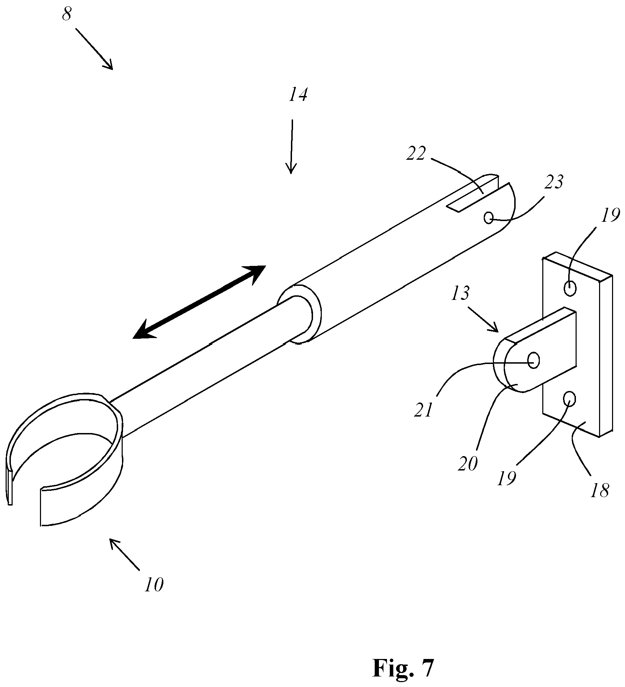

Figur 7 zeigt in einer schematischen Explosionsdarstellung ein zweites Ausführungsbeispiel eines Stützarmes 8 eines erfindungsgemäßen Fahrradhalters.

Der Stützarm 8 weist ein Befestigungselement 9 auf, das an einer Wand, beispielsweise einer Garagenwand, mittels Befestigungsschrauben 11 angeschraubt werden kann. Das Befestigungselement 9 hat einen Flansch 18 mit zwei Durchgangsbohrungen 19 für nicht dargestellte Befestigungsschrauben 11. Der Flansch 18 trägt eine Halteplatte 20 mit einer Bohrung 21. Die Halteplatte 20 bildet einen ersten Stützarmteil 13, der gelenkig mit einem zweiten Stützarmteil 14 verbunden wird. Hierzu weist der zweite Stützarmteil 14 einen Schlitz 22 für die Halteplatte 20 auf. Im Bereich des Schlitzes 22 weist der zweite Stützarmteil 14 zwei Durchgangsbohrungen 23 für einen (nicht dargestellten) Gelenkbolzen auf.

Der Stützarm 8 kann wahlweise in eine Bereitschaftsstellung oder eine Wirkstellung überführt werden. Der zweite Stützarmteil 14 ist in der Bereitschaftsstellung weggeklappt und parallel zu der Wand angeordnet, an der die Horizontalstützvorrichtung 3 befestigt ist. In der Wirkstellung steht der zweite Stützarmteil 14 senkrecht von der Wand ab, an der die Horizontalstützvorrichtung 3 befestigt ist.

Der zweite Stützarmteil 14 ist teleskopierbar ausgebildet. Er kann vorteilhaft eine, vorzugsweise werkzeugfrei bedienbare, Feststellvorrichtung, beispielsweise eine Klemmvorrichtung, aufweisen, um die jeweils eingestellte Teleskopstellung zu arretieren.

Der Stützarm 8 weist außerdem an seinem freien Ende eine Koppelvorrichtung 10 zum Ankoppeln an ein Fahrrad 2 auf, die als elastische Rastklammer ausgebildet ist. Die Koppelvorrichtung 10 ist insbesondere dazu ausgebildet, ein Rahmenteil eines zu haltenden Fahrrades 2 rastend zu umgreifen.

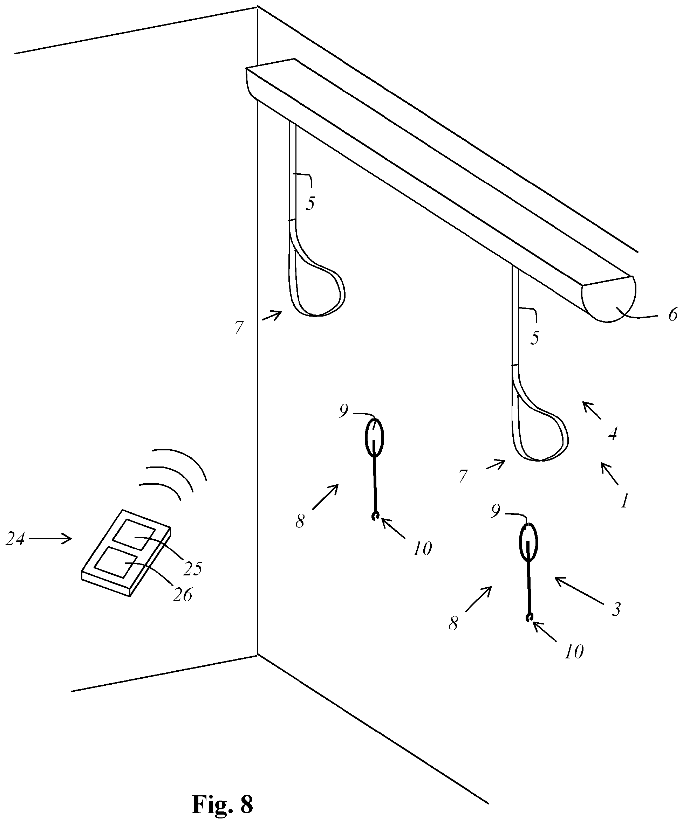

Fig. 8 zeigt ein zweites Ausführungsbeispiel eines erfindungsgemäßen Fahrradhalters ohne ein Fahrrad 2. Der Fahrradhalter weist eine Hängevorrichtung 1 auf, die an einer (in dieser Figur nicht sichtbaren) Decke, beispielsweise einer Garagendecke, montiert ist und die dazu ausgebildet ist, ein Fahrrad 2 hängend zu halten.

Die Hängevorrichtung 1 weist eine Hebevorrichtung 4 mit zwei flexiblen Zugmitteln 5 auf. Die Hebevorrichtung 4 weist außerdem eine (nicht dargestellte) Wickelwelle auf, die in einem Gehäuse 6 angeordnet ist und auf die die Zugmittel 5 aufwickelbar sind. Die Zugmittel 5 sind aus Bändern gefertigt, die insbesondere textile Bänder sein können. Das Gehäuse 6 weist für jedes der Zugmittel 5 eine (in den Figuren nicht sichtbare) Auslassöffnung auf. An den freien Enden weisen die Zugmittel 5 jeweils ein Ankoppelelement 7, nämlich eine verstellbare Schlaufe, zum Ankoppeln eines Fahrrades 2 auf.

Zur Steuerung des Antriebsmotors 5 ist bei diesem Ausführungsbeispiel eine Funkfernbedienung 24 vorhanden. Die Funkfernbedienung 24 weist eine erste Taste 25 für "Aufwärts" und eine zweite Taste 26 für "Abwärts" auf. Beim Drücken der ersten Taste 25 für "Aufwärts" wird ein angekoppeltes Fahrrad nach oben in die Aufbewahrungsposition gezogen. Beim Drücken der zweiten Taste 26 für "Abwärts" wird das Fahrrad wieder abgelassen.

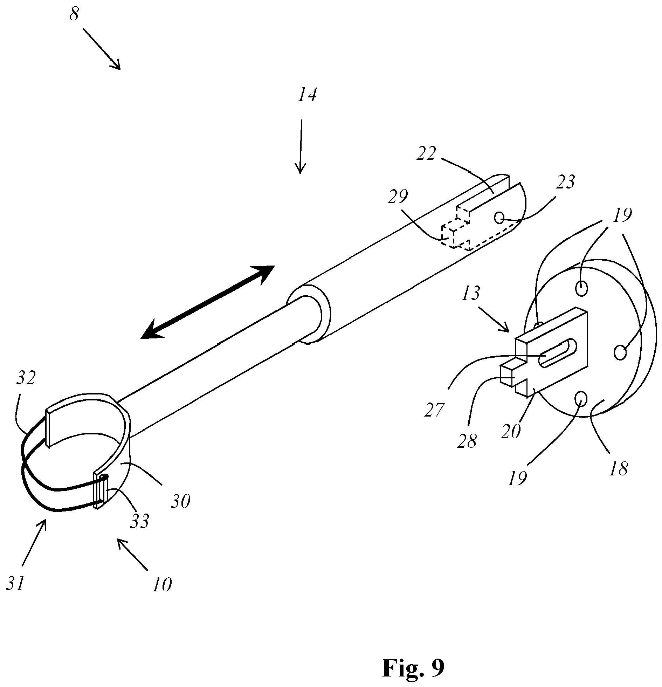

Figur 9 zeigt in einer schematischen Explosionsdarstellung ein drittes Ausführungsbeispiel eines Stützarmes 8 eines erfindungsgemäßen Fahrradhalters.

Der Stützarm 8 weist ein Befestigungselement 9 auf, das an einer Wand, beispielsweise einer Garagenwand, mittels Befestigungsschrauben 11 angeschraubt werden kann. Das Befestigungselement 9 hat einen kreisrunden Flansch 18 mit vier Durchgangsbohrungen 19 für nicht dargestellte Befestigungsschrauben 11. Der Flansch 18 trägt eine Halteplatte 20 mit einem Langloch 27. Die Halteplatte 20 bildet einen ersten Stützarmteil 13, der gelenkig mit einem zweiten Stützarmteil 14 verbunden wird. Hierzu weist der zweite Stützarmteil 14 einen Schlitz 22 für die Halteplatte 20 auf. Im Bereich des Schlitzes 22 weist der zweite Stützarmteil 14 zwei Durchgangsbohrungen 23 für einen (nicht dargestellten) Gelenkbolzen auf. Der (nicht dargestellte) Gelenkbolzen verläuft durch das Langloch 27.

Der Stützarm 8 kann wahlweise in eine Bereitschaftsstellung oder eine Wirkstellung überführt werden. Der zweite Stützarmteil 14 ist in der Bereitschaftsstellung weggeklappt und parallel zu der Wand angeordnet, an der die Horizontalstützvorrichtung 3 befestigt ist. In der Wirkstellung steht der zweite Stützarmteil 14 senkrecht von der Wand ab, an der die Horizontalstützvorrichtung 3 befestigt ist. Hierzu kann das zweite Stützarmteil 14 zunächst nach oben in die Waagerechte geklappt und anschließend horizontal in Richtung auf den Flansch bewegt werden, wobei der (nicht dargestellte) Gelenkbolzen linear in dem Langloch 27 verschoben wird. Durch die horizontale Bewegung kommt eine Blockiernase 28 formschlüssig in Eingriff mit einer entsprechend gegengeformten Ausnehmung am Ende des Schlitzes 22 des zweiten Stützarmteils 14, so dass die Schwenkbarkeit des zweiten Stützarmteils 14 relativ zum ersten Stützarmteil 13 arretiert wird. Um den zweiten Stützarmteil 14 zurück in die Bereitschaftsstellung zu überführen, werden die Bewegungen in umgekehrter Reihenfolge ausgeführt.

Der zweite Stützarmteil 14 ist teleskopierbar ausgebildet. Er kann vorteilhaft eine, vorzugsweise werkzeugfrei bedienbare, Feststellvorrichtung, beispielsweise eine Klemmvorrichtung, aufweisen, um die jeweils eingestellte Teleskopstellung zu arretieren.

Der Stützarm 8 weist außerdem an seinem freien Ende eine Koppelvorrichtung 10 zum Ankoppeln an ein Fahrrad 2 auf.

Die Koppelvorrichtung 10 weist ein halbzylinderförmiges, Anlageelement 30 auf, das an ein Rahmenteil eines Fahrradrahmens, beispielsweise an ein Gabelrohr, ein Sattelstützenrohr, eine Kettenstrebe oder eine Sattelstützstrebe, anlegbar ist. Vorzugsweise ist das Anlageelement 30 aus einem elastischen Material gefertigt. Dies hat den besonderen Vorteil, dass sich das Anlegeelement an das jeweilige Rahmenteil anschmiegen kann. Die Koppelvorrichtung 10 weist außerdem ein Verschlusselement 31 auf, das als elastischer Ring 32, insbesondere als Gummiring, derart an dem Anlegeelement festlegbar ist, dass es gemeinsam dem Anlegeelement 30 das (nicht dargestellte) Rahmenteil umschließt und dadurch fixiert. Das Anlegeelement 30 weist zwei Befestigungselemente zum, vorzugsweise werkzeugfreien, Festlegen des Verschlusselements 31 auf. Die Befestigungselemente sind als Haken 33 ausgebildet, in die der elastische Ring 32 eingehängt werden kann.

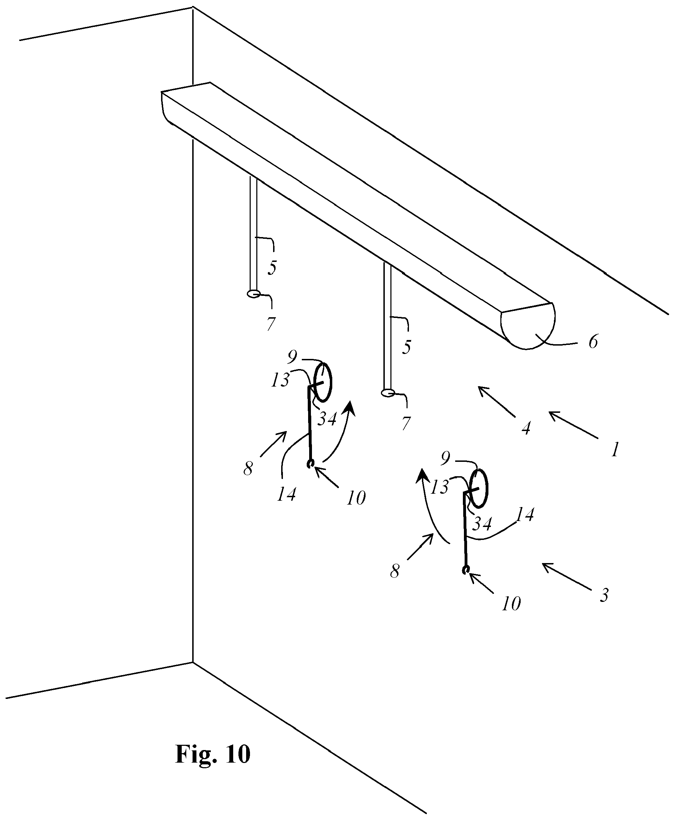

Figur 10 zeigt ein drittes Ausführungsbeispiel eines erfindungsgemäßen Fahrradhalters ohne ein Fahrrad 2. Der Fahrradhalter weist eine Hängevorrichtung 1 auf, die an einer (in dieser Figur nicht sichtbaren) Decke, beispielsweise einer Garagendecke, montiert ist und die dazu ausgebildet ist, ein Fahrrad 2 hängend zu halten.

Die Hängevorrichtung 1 weist eine Hebevorrichtung 4 mit zwei flexiblen Zugmitteln 5 auf. Die Hebevorrichtung 4 weist außerdem eine (nicht dargestellte) Wickelwelle auf, die in einem Gehäuse 6 angeordnet ist und auf die die Zugmittel 5 aufwickelbar sind. Die Zugmittel 5 sind aus Bändern gefertigt, die insbesondere textile Bänder sein können. Das Gehäuse 6 weist für jedes der Zugmittel 5 eine (in den Figuren nicht sichtbare) Auslassöffnung auf.

An den freien Enden weisen die Zugmittel 5 jeweils ein Ankoppelelement 7, beispielsweise eine Schlaufe oder einen Haken, zum Ankoppeln eines Fahrrades 2 auf.

Um ein Fahrrad 2 anzukoppeln, werden die flexiblen Zugmittel 5 durch Einschalten des Antriebsmotors zunächst so weit von der (nicht dargestellten) Wickelwelle abgewickelt, bis sie von einem am Boden stehenden Bediener an dem stehenden Fahrrad 2 mittels der Ankoppelelement 7 befestigt werden können.

Nach dem Befestigen des Fahrrades 2 an den Zugmitteln 5 wird der Antriebsmotor wieder eingeschaltet und die Wickelwelle dadurch bei entgegengesetzter Rotationsrichtung wieder in Rotation versetzt. Hierdurch werden die Zugmittel 5 wieder auf die Wickelwelle aufgewickelt, wodurch das Fahrrad 2 nach oben in eine Aufbewahrungsposition gezogen wird. Anschließend wird das hängende Fahrrad in horizontaler Sichtung mittels einer Horizontalstützvorrichtung 3 horizontal abstützt.

Die Horizontalstützvorrichtung 3 weist zwei Stützarme 8 auf. Jeder Stützarm 8 weist ein Befestigungselement 9 auf, das an einer Wand, beispielsweise einer Garagenwand, angeschraubt ist. Jeder Stützarm 8 weist außerdem an seinem freien Ende eine Koppelvorrichtung 10 zum Ankoppeln an ein Fahrrad 2 auf. Vorzugsweise ist die Länge der Stützarme 8, insbesondere stufenlos, einstellbar.

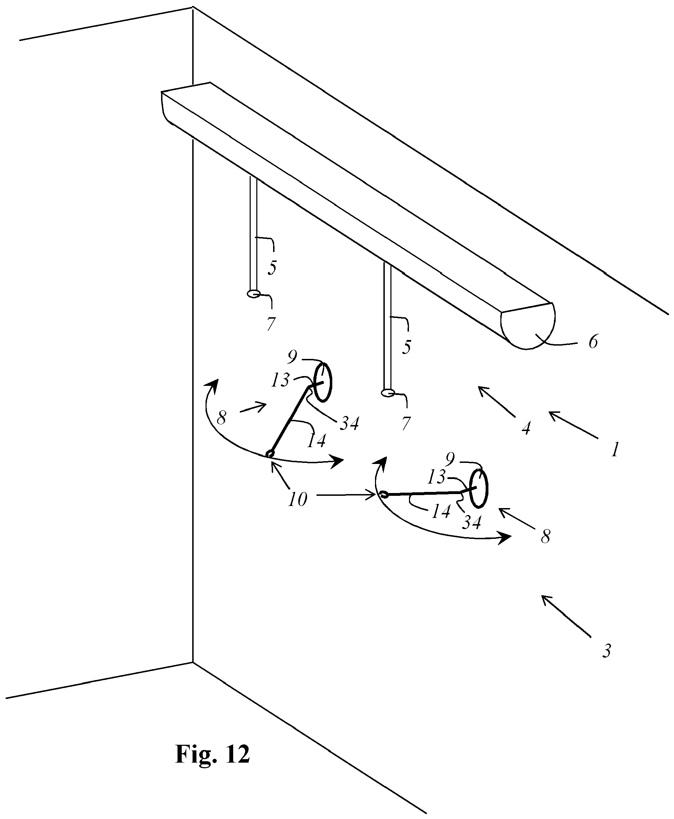

Jeder Stützarm 8 kann wahlweise in eine Bereitschaftsstellung (wie in Figur 10 dargestellt) oder eine Wirkstellung (wie in Figur 12 dargestellt) überführt werden. Die Stützarme 8 sind in der Bereitschaftsstellung weggeklappt und parallel zu der Wand angeordnet, an der die Horizontalstützvorrichtung 3 befestigt ist.

Jeder Stützarm 8 weist ein zwei Stützarmteile 13, 14 auf. Ein erstes Stützarmteil 13 ist jeweils senkrecht zur Wand und um seine Längserstreckungsrichtung drehbar an der Wand befestigt. Hierfür ist das erste Stützarmteil 13 mittels eines ersten Drehgelenks an dem Befestigungselement 9 befestigt. Das zweite Stützarmteil 14 ist mittels eines weiteren Drehgelenks 34, das als Scharniergelenk ausgebildet ist, schwenkbar an dem ersten Stützarmteil 13 befestigt. Die ermöglicht es, dass das zweite Stützarmteil 14 in der Bereitschaftsstellung (dargestellt in Figur 10) vertikal nach unten ausgerichtet sein kann.

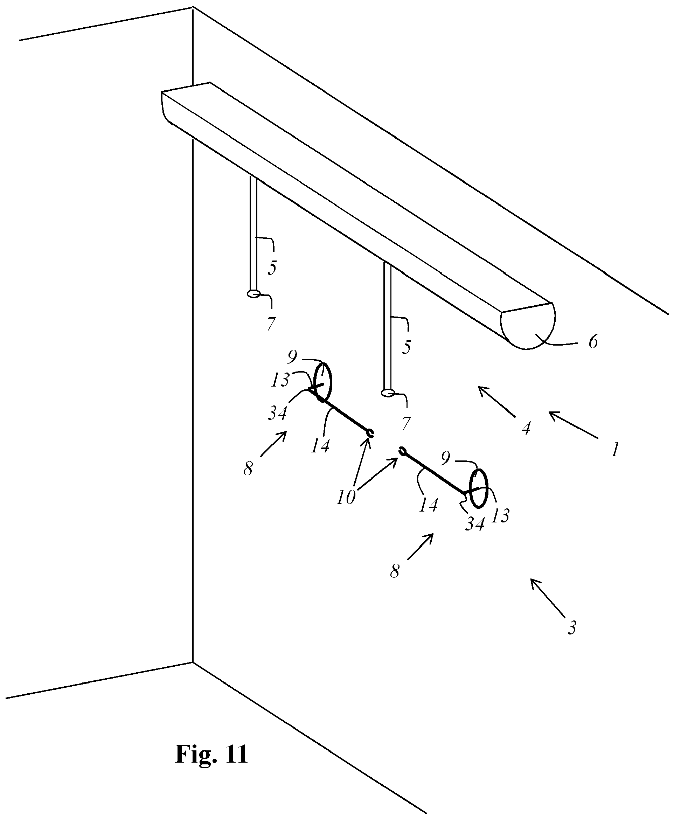

Um das zweite Stützarmteil 14 in die Wirkstellung zu überführen kann es mittels des ersten Drehgelenks um 90 Grad nach oben geschwenkt werden, was in Figur 11 durch die gebogenen Pfeile dargestellt ist. Das zweite Drehgelenk 34 erlaubt es dann, das zweite Stützarmteil 14 in einer horizontalen Ebene zu schwenken was durch die gebogenen Pfeile in Figur 12 dargestellt ist.

Um das zweite Stützarmteil 14 zurück in die Bereitschaftsstellung zu überführen, werden die beschriebenen Bewegungen des zweiten Stützarmteils 14 in umgekehrter Reihenfolge ausgeführt.

Das zweite Stützarmteil 14 jedes Stützarmes 8 ist hinsichtlich seiner Länge einstellbar. Insbesondere kann das zweite Stützarmteil 14 teleskopierbar ausgebildet sein.

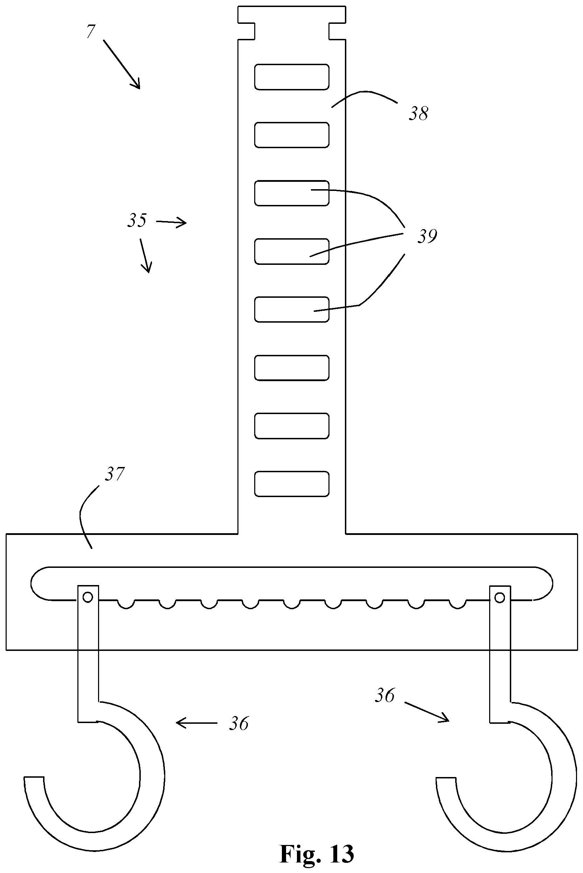

Fig. 13 zeigt ein Ausführungsbeispiel eines Ankoppelelements 7 nach einem eigenständigen Erfindungsgedanken, der in Kombination aber alternativ auch losgelöst von dem Aspekt einer Horizontalstützvorrichtung 3 umsetzbar ist.

Bei diesem Ausführungsbeispiel weist das Ankoppelelement 7 einen T-förmigen Träger 35 und zwei Subankoppelelemente 36 auf, die jeweils als Haken ausgebildet sind und die an unterschiedlichen Positionen des Trägers 35 festlegbar ist. Auf diese Weise kann der Abstand der Subankoppelelemente 36 individuell und auf das aufzuhängende Fahrrad angepasst eingestellt werden.

Der Träger 35 weist einen horizontalen Schenkel 37 aufweisen, an dem die Subankoppelelemente 36 verschiebbar angeordnet sind. Der Träger 35 weist außerdem einen vertikalen Schenkel 38 auf, der an dem horizontalen Schenkel 36 angeordnet ist. Konkret ist ein Ende des vertikalen Schenkels 38 mittig an dem horizontalen Träger 37 angeordnet.

Der vertikale Schenkel 38 weist mehrere Befestigungsösen 39 zum Ankoppeln eines Zugmittels 5 einer Hebevorrichtung 4 auf.

### Bezugszeichenliste:

- 1: Hängevorrichtung
- 2: Fahrrad
- 3: Horizontalstützvorrichtung
- 4: Hebevorrichtung
- 5: Zugmittel
- 6: Gehäuse
- 7: Ankoppelelement
- 8: Stützarm
- 9: Befestigungselement
- 10: Koppelvorrichtung
- 11: Befestigungsschraube
- 12: Gelenk
- 13: erster Stützarmteil
- 14: zweiter Stützarmteil
- 15: Bolzen
- 16: Schlitz
- 17: Hülse
- 18: Flansch
- 19: Durchgangsbohrung
- 20: Halteplatte
- 21: Bohrung
- 22: Schlitz
- 23: Durchgangsbohrung
- 24: Funkfernbedienung
- 25: erste Taste
- 26: zweite Taste
- 27: Langloch
- 28: Blockiernase
- 29: Ausnehmung
- 30: Anlageelement
- 31: Verschlusselement
- 32: elastischer Ring
- 33: Haken
- 34: Weiteres Drehgelenk
- 35: Träger
- 36: Subankoppelelement
- 37: horizontaler Schenkel
- 38: vertikaler Schenkel
- 39: Befestigungsöse

## Patentansprüche

1. Fahrradhalter mit einer Hängevorrichtung (1), die dazu ausgebildet und bestimmt ist, an einer Wand oder an einer Decke montiert zu werden und ein Fahrrad (2) hängend zu halten, **dadurch gekennzeichnet, dass** der Fahrradhalter eine Horizontalstützvorrichtung (3) aufweist, mittels der ein an der Hängevorrichtung (1) hängendes Fahrrad (2) horizontal fixierbar ist.

2. Fahrradhalter nach Anspruch 1, **dadurch gekennzeichnet, dass** die Horizontalstützvorrichtung (3) dazu ausgebildet ist, an einer Wand montiert zu werden.

3. Fahrradhalter nach Anspruch 1 oder 2, **dadurch gekennzeichnet, dass** die Horizontalstützvorrichtung (3) wenigsten einen Stützarm (8) aufweist.

4. Fahrradhalter nach Anspruch 3, **dadurch gekennzeichnet, dass**
a. der Stützarm (8) ein Befestigungselement (9) aufweist, das dazu ausgebildet ist, an eine Wand angeschraubt zu werden, oder dass
b. der Stützarm (8) ein Befestigungselement (9) aufweist, das dazu ausgebildet ist, an eine Wand angeschraubt zu werden, und das einen Flansch (18) mit wenigstens einer Durchgangsbohrung (19) für eine Befestigungsschraube (11) aufweist.

5. Fahrradhalter nach Anspruch 3 oder 4, **dadurch gekennzeichnet, dass**
a. der Stützarm (8) an seinem freien Ende eine, insbesondere werkzeugfrei bedienbare Koppelvorrichtung (10) zum Ankoppeln an ein Fahrrad (2) aufweist, oder dass
b. der Stützarm (8) an seinem freien Ende eine, insbesondere werkzeugfrei bedienbare Koppelvorrichtung (10) zum Ankoppeln an ein Fahrrad (2) aufweist, die eine Klammer und/oder eine Rastvorrichtung und/oder eine Spannzange und/oder eine Befestigungsöse und/oder einen Haken aufweist.

6. Fahrradhalter nach einem der Ansprüche 1 bis 5, **dadurch gekennzeichnet, dass** die horizontale Länge der Horizontalstützvorrichtung (3), insbesondere stufenlos, einstellbar ist.

7. Fahrradhalter nach einem der Ansprüche 1 bis 6, **dadurch gekennzeichnet, dass**, die Horizontalstützvorrichtung (3) klappbar ausgebildet ist.

8. Fahrradhalter nach einem der Ansprüche 1 bis 7, **dadurch gekennzeichnet, dass** die Horizontalstützvorrichtung (3) wahlweise in eine Bereitschaftsstellung oder eine Wirkstellung überführbar ist.

9. Fahrradhalter nach Anspruch 8, **dadurch gekennzeichnet, dass**
a. wenigstens ein Teil des Stützarmes (8) in der Bereitschaftsstellung parallel zu der Wand angeordnet ist, an der die Horizontalstützvorrichtung (3) befestigt ist, und/oder dass wenigstens ein Teil des Stützarmes (8) in der Bereitschaftsstellung an der Wand anliegt, an der die Horizontalstützvorrichtung (3) befestigt ist, und/oder dass
b. wenigstens ein Teil des Stützarmes (8) in der Wirkstellung in einem von Null Grad verschiedenen Winkel, insbesondere senkrecht, zu der Wand angeordnet ist, an der die Horizontalstützvorrichtung (3) befestigt ist, und/oder dass wenigstens ein Teil des Stützarmes (8) in der Wirkstellung von der Wand absteht, an der die Horizontalstützvorrichtung (3) befestigt ist.

10. Fahrradhalter nach einem der Ansprüche 3 bis 9, **dadurch gekennzeichnet, dass**
a. der Stützarm (8) zwei mittels eines Gelenks (12) gelenkig verbundene Stützarmteile (13, 14) aufweist, und/oder dass
b. der Stützarm (8) zwei mittels eines Gelenks (12) gelenkig verbundene Stützarmteile (13, 14) aufweist, wobei das Gelenk (12) arretierbar ist und/oder dass der Stützarm (8) ein Arretiermittel, insbesondere eine Hülse (17), zum Arretieren des Gelenks (12) aufweist, und/oder dass
c. der Stützarm (8) zwei mittels eines Gelenks (12) gelenkig verbundene Stützarmteile (13, 14) aufweist, wobei das Gelenk (12) als Drehgelenk oder als Drehschiebegelenk ausgebildet ist.

11. Fahrradhalter nach einem der Ansprüche 3 bis 10, **dadurch gekennzeichnet, dass** der Stützarm (8) teleskopierbar ausgebildet ist.

12. Fahrradhalter nach einem der Ansprüche 1 bis 11, **dadurch gekennzeichnet, dass**
a. die Hängevorrichtung (1) eine Hebevorrichtung (4), insbesondere mit einer Wickelwelle, mit wenigstens einem flexiblen Zugmittel (5) zum Heraufziehen und Wiederablassen eines an dem wenigstens einen Zugmittel (5) befestigten Fahrrades (2) aufweist, und/oder dass
b. Hängevorrichtung (1) eine Hebevorrichtung (4), insbesondere mit einer Wickelwelle, mit wenigstens einem flexiblen Zugmittel (5) zum Heraufziehen und Wiederablassen eines an dem wenigstens einen Zugmittel (5) befestigten Fahrrades (2) aufweist, wobei das Zugmittel an seinem freien Ende ein Ankoppelelement zum Ankoppeln eines Fahrrades aufweist oder dass jedes der Zugmittel an seinem freien Ende ein Ankoppelelement zum Ankoppeln eines Fahrrades aufweist.

13. Fahrradhalter nach einem der Ansprüche 1 bis 12, **dadurch gekennzeichnet, dass** die Hebevorrichtung (4) einen elektrischen Antriebsmotor aufweist.

14. Fahrradhalter nach Anspruch 13, **gekennzeichnet durch** einen elektrischen Energiespeicher, insbesondere einen Akku, der Energie zum Betreiben des Antriebsmotors bereitstellt.

15. Fahrradhalter nach einem der Ansprüche 1 bis 14, **gekennzeichnet durch**
a. einen elektrischen Steckverbinder zum Ausgeben von elektrischer Energie, und/oder
b. durch einen Stromrichter, insbesondere einen Transformator oder ein Schaltnetzteil.
